# EUROPÄISCHE PATENTSCHRIFT

(11) **EP 3 681 692 B1**
(45) Veröffentlichungstag und Bekanntmachung des Hinweises auf die Patenterteilung: **22.06.2022**
(21) Anmeldenummer: 18773101.3
(22) Anmeldetag: 06.09.2018
(51) Int. Cl.: B29C 49/78

(54) **VERFAHREN UND VORRICHTUNG ZUR HERSTELLUNG VON BEHÄLTERN AUS THERMOPLASTISCHEM MATERIAL**
PROCESS AND DEVICE FOR MANUFACTURING OF PLASTIC CONTAINERS
PROCÉDÉ ET DISPOSITIF POUR LA FABRICATION DE CONTENEUR EN MATIÈRE PLASTIQUE

(30) Priorität: 10.09.2017 DE 102017120863
(43) Veröffentlichungstag der Anmeldung: 22.07.2020
(73) Patentinhaber: KHS GmbH, 44143 Dortmund (DE)
(72) Erfinder: LINKE, Michael, 22159 Hamburg (DE); BAUMGARTE, Rolf, 22926 Ahrensburg (DE); BERGER, Frank, 22885 Barsbüttel (DE); ULUTÜRK, Deniz, 22761 Hamburg (DE); RASCH, Jens-Peter, 22926 Ahrensburg (DE); WIESE, Arne, 22926 Ahrensburg (DE); ZIMMERING, Bernd, 22111 Hamburg (DE); HEROLD, Thomas, 23863 Bargfeld-Stegen (DE); GERKENS, André, 22926 Ahrensburg (DE); HAESENDONCKX, Frank, 22145 Hamburg (DE)
(74) Vertreter: Eisenführ Speiser
(86) Internationale Anmeldenummer: PCT/EP2018/074021
(87) Internationale Veröffentlichungsnummer: WO 2019/048552

(56) Entgegenhaltungen:
- EP-A1- 3 037 242
- EP-A2- 2 835 248
- EP-B1- 2 763 904
- DE-A1- 10 116 665
- DE-A1-102011 017 448
- US-A1- 2009 108 505

## Beschreibung

Die Erfindung betrifft ein Verfahren zur Herstellung von Behältern aus thermoplastischem Material nach dem Oberbegriff des Anspruchs 1 und eine Blasmaschine nach dem Oberbegriff des Anspruchs 7.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE 4340291 A1). Typischerweise weist eine Blasmaschine eine Temperiervorrichtung zum Temperieren bzw. zum thermischen Konditionieren der Vorformlinge sowie eine Blaseinrichtung mit wenigstens einer auch als Umformstation bezeichneten Blasstation auf, in deren Bereich der jeweils zuvor temperierte Vorformling zu einem Behälter expandiert wird. Die Expansion erfolgt mit Hilfe eines Druckgases (in der Regel Druckluft) als Formfluid oder Druckmedium, das mit einem Formdruck in den zu expandierenden Vorformling eingeleitet wird. Der verfahrenstechnische Ablauf bei einer derartigen Expansion des Vorformlings wird beispielsweise in der DE 4340291 A1 erläutert. Der grundsätzliche Aufbau einer Blasstation ist beispielsweise in der DE 4212583 A1 beschrieben. Möglichkeiten der Temperierung der Vorformlinge sind beispielsweise in der DE 2352926 A1 erläutert. Unter Temperierung oder thermischer Konditionierung wird dabei verstanden, dass der Vorformling auf eine für die Blasumformung geeignete Temperatur erwärmt und gegebenenfalls ein zum Beispiel der Kontur des herzustellenden Behälters angepassten Temperaturprofil dem Vorformling aufgeprägt wird. Die Blasformung von Behältern aus Vorformlingen unter zusätzlicher Verwendung einer Reckstange ist ebenfalls bekannt.

Aus dem Stand der Technik ist auch bekannt, Behälter, insbesondere in Form von Flaschen, aus thermisch konditionierten bzw. temperierten Vorformlingen herzustellen und dabei gleichzeitig mit einem flüssigen Füllgut zu befüllen. Das Füllgut wird dabei als hydraulisches Formfluid bzw. Druckmedium zum Expandieren des Vorformlings bzw. zum Ausformen des Behälters mit einem Form- und Fülldruck zugeführt, sodass zeitgleich mit dem Füllen der jeweilige Vorformling in den Behälter umgeformt wird. Auch hier ist es bekannt, diese Umformung durch den Einsatz einer Reckstange zu unterstützen. Derartige Verfahren, bei denen ein gleichzeitiges Formen und Füllen des jeweiligen Behälters erfolgt, können auch als hydraulische Umformverfahren oder als hydraulische Behälterformung bezeichnet werden. Entsprechende Vorrichtungen werden auch als Formfüllanlagen oder Formfüllmaschinen bezeichnet.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7914726 B2. Ein weiteres Beispiel zeigt die DE 102010007541 A1.

Bei der Behälterformung mit einer Vorrichtung die mehrere Umformstationen aufweist besteht eine wichtige Qualitätsanforderung darin, mit den verschiedenen Umformstationen möglichst identische Behälter herzustellen, die untereinander keine oder nur in engen Toleranzgrenzen Abweichungen in ihren Behältereigenschaften wie der Materialverteilung der Behälterwandung aufweisen. Einen wesentlichen Einfluss auf die Behältereigenschaften haben die den Umformungsprozess beeinflussenden Bauteile oder Baugruppen jeder Umformstation. Solche, den Umformungsprozess beeinflussende Baugruppen sind zum Beispiel die steuerbaren Ventile, mit denen das Formfluid unter Druck in den Vorformling eingelassen wird, und - soweit vorhanden - die Reckstange, die zur Streckung und Führung in den Vorformling eingefahren wird. Dabei können bereits geringe Unterschiede der prozessrelevanten Eigenschaften zwischen den Umformstationen zu störend großen Unterschieden in der Wanddickenverteilung der mit unterschiedlichen Umformstationen hergestellten Behälter führen. Solche prozessrelevanten Eigenschaften können zum Beispiel das Öffnungs- oder Schließverhalten der Ventile oder unterschiedliche Lagerreibungen der Reckstange sein. Die dadurch Unterschiede im Prozessablauf der Behälterumformung bei verschiedenen Umformstationen sind somit zurückzuführen auf Abweichungen in den Bauteilcharakteristika zwischen den jeweils relevanten Baugruppen der Umformungsstationen.

Problematisch ist, dass jedes, den Formungsprozess bestimmende Bauteil der Umformstationen wie insbesondere die steuerbaren Ventile einer Umformstation schon herstellungsbedingt in bestimmten Toleranzgrenzen eine eigene Bauteilcharakteristik aufweist. Die Bauteilcharakteristik eines Ventils kann zum Beispiel die individuelle spezifische Reaktionszeit des Ventils auf einen Schaltimpuls einer Steuereinrichtung betreffen. Um Abweichungen zum Beispiel die Schaltcharakteristika zwischen den Ventilen unterschiedlicher Umformstationen so gering wie möglich zu halten, werden die eingesetzten Ventile üblicherweise mit möglichst hoher Präzision hergestellt, um somit sehr enge Toleranzgrenzen in der Fertigung der Ventile einzuhalten und damit näherungsweise identische Ventile zu erhalten. Entsprechend präzise werden auch die übrigen, den Formungsprozess im Wesentlichen bestimmenden Baugruppen, wie die Reckstange und der zugehörige Lagerungs- und Antriebstrang, hergestellt, um Abweichungen in den Bauteilcharakteristika zu vermeiden. Die hohe Präzision in der Herstellung der Baugruppen ist aufwendig und entsprechend teuer.

Hinzu kommt des Weiteren, dass es selbst bei sehr präziser Herstellung der einzelnen Bauteile oder Baugruppen zu unterschiedlichen Alterungsverhalten gleichartiger Bauteile oder Baugruppen kommen kann und damit unterschiedliche Verschleißzustände zu einer über die Einsatzdauer ansteigenden Varianz zwischen den mit unterschiedlichen Umformstationen hergestellten Behälter kommen kann.

Aus der EP 3 037 242 A1 und der DE 101 16 665 A1 sind Verfahren zur Herstellung von Behältern bekannt, bei denen an fertigen Behältern Messungen erfolgen, die für die Regelung oder Steuerung des Umformprozesses verwendet werden. Die Regelung/Steuerung erfolgt stationsspezifisch. In der EP 2 763 904 B1 werden ebenfalls an Behältern Messwerte gewonnen und damit Behälterbehandlungsstationen gesteuert. Es wird auch beschrieben, Messungen an Maschinenelementen vorzunehmen und dieerhaltenen Messwerte in die Maschinensteuerung einfließen zu lassen.

Die US 2009/0108505 A1 beschreibt die Steuerung eines Aufheizofens für Vorformlinge in Abhängigkeit von Messgrößen, die am beheizten Vorformling oder am hergestellten Behälter gewonnen werden.

Die EP 2 835 248 A2 beschreibt Verfahren zur Produktionskontrolle von streckgeblasenen Behältern, bei denen Testvorformlinge eingesetzt werden.

Die DE 10 2011 017 448 A1 beschreibt Verfahren zur Erkennung von gegenwärtigen oder zukünftigen Fehlerzuständen einer Behälterbehandlungsanlage. Sensoren ermitteln hierzu Messwerte an Anlagenelementen.

Die der Erfindung zugrunde liegende Aufgabe besteht darin, ein Verfahren und eine Vorrichtung zur Herstellung von Behältern bereitzustellen, die es ermöglichen, die Varianz zwischen den mit unterschiedlichen Umformstationen hergestellten Behältern möglichst gering zu halten.

Diese Aufgabe wird gelöst durch ein Verfahren mit den Merkmalen des Anspruchs 1 und eine Vorrichtung mit den Merkmalen des Anspruchs 7. Vorteilhafte Ausgestaltungen sind in den Unteransprüchen angegeben.

Erfindungsgemäß ist ein Verfahren zur Herstellung von Behältern aus Vorformlingen aus thermoplastischem Material mittels einer Blasmaschine aufweisend mindestens eine Temperiervorrichtung und eine Umformvorrichtung mit mindestens zwei Umformstationen, wobei die Vorformlinge mittels der Temperiervorrichtung anhand vorgebbarer erster Steuerparameter temperiert werden, und wobei jeweils ein temperierter Vorformling mittels einer der Umformstationen anhand vorgebbarer zweiter Steuerparameter in einen Behälter umgeformt wird, wobei wenigstens einer der zweiten Steuerparameter für jede der Umformstationen individuell vorgegeben wird.

Gemeinhin werden die ersten Steuerparameter auch oft Heizparameter genannt. Dies sind beispielsweise Leistungs- oder Temperaturparameter für Heizstrahler oder Gruppen von Heizstrahlern in der Temperiervorrichtung. Andere mögliche erste Steuerparameter sind beispielsweise Leistungs- oder Drehzahlparameter für ein Gebläse zur Oberflächenkühlung der Vorformlinge innerhalb der Temperiervorrichtung.

Die zweiten Steuerparameter gemäß der Erfindung werden auch oft als Blasparameter beschrieben. Hierbei handelt es sich beispielsweise um Steuerparameter für die Reckstangenbewegung, darunter auch aber nicht ausschließlich Leistungs- oder Drehzahlparameter, Geschwindigkeitsparameter oder auch Weg-Zeit-Parameter. Andere beispielhafte zweite Steuerparameter betreffen die Zuführung des Blasfluids, beispielsweise Schalt- oder Stellungsparameter für Ventile oder Druckparameter für Druckfluidquellen.

Die vorstehende Auflistung von ersten Steuerparametern und zweiten Steuerparametern ist dabei im Rahmen der Erfindung ausdrücklich exemplarisch und nicht abschließend zu verstehen.

Im Rahmen der Erfindung sind Steuerparameter insbesondere diejenigen Werte und/oder Signale, die zur Steuerung oder Regelung der verfahrensrelevanten Bauteile und/oder Baugruppen zwischen einer übergeordneten Maschinensteuerung und den jeweiligen Bauteilen/Baugruppen ausgetauscht werden. Die Maschinensteuerung ist dabei insbesondere etwaiger vorhandener Leistungselektronik oder Steuergeräte der Bauteile bzw. Baugruppen hierarchisch übergeordnet.

Üblicherweise werden Steuerparameter zur Ansteuerung der einzelnen Umformstationen einer Blasmaschine global, also für sämtliche Umformstationen identisch vorgegeben, sodass jede Umformstation die gleichen Steuerbefehle erhält. Solche Steuerbefehle können beispielsweise Schaltbefehle für die Öffnung oder Schließung von Ventilen sein oder Schaltbefehle für die Aktivierung oder Deaktivierung eines Reckstangenantriebes. Dabei sei erwähnt, dass bei Rundläufermaschinen, bei denen die Umformstationen umfangsverteilt auf einem Arbeitsrad angeordnet sind, die von den Steuerparametern abhängigen Steuerbefehle üblicherweise zeitversetzt, insbesondere in Abhängigkeit der Umdrehungsgeschwindigkeit des Arbeitsrades an die jeweiligen Baugruppen wie zum Beispiel den Ventile oder Reckstangenantriebe der einzelnen Umformstationen abgegeben werden.

Unter idealen Bedingungen, in denen es keine baulichen oder funktionsbezogenen Unterschiede zwischen den einzelnen Umformstationen der Behälterherstellungsmaschine gibt, führt eine globale Vorgabe von Steuerparametern zu identischen Behälterformprozessen in jeder Umformstation und somit zu identischen Behältern mit identischen Behältereigenschaften. Unter realen Bedingungen existieren zwischen den einzelnen Umformstationen jedoch Unterschiede, die zu unterschiedlichen Behälterformungsprozessen in verschiedenen Umformungsstationen führt. Die mit unterschiedlichen Umformungsstationen hergestellten Behälter weisen damit unterschiedliche Behältereigenschaften auf. Insbesondere bei sehr dünnwandigen Behältern oder Behältern mit einer komplexen Profilgeometrie können gewünschte Varianzen jedoch oft nicht mehr mit einer globalen Einstellung der Steuerparameter eingehalten werden.

Daher wird erfindungsgemäß vorgeschlagen, wenigstens einen der Steuerparameter zur Ansteuerung von den Umformungspress beeinflussenden Baugruppen wie Ventile oder Reckstangenantriebe stationsindividuell vorzugeben. Die erfindungsgemäße stationsspezifische individuelle Vorgabe von Steuerparametern ermöglicht eine auf jede einzelne der Umformstationen angepasste Ansteuerung einzelner Baugruppen oder Bauteile, was zu einer deutlich verbesserten Möglichkeit zur Reduzierung der Varianz in der Behälterqualität zwischen den mit unterschiedlichen Umformstationen hergestellten Behältern führt.

Dabei können im Rahmen der Erfindung alle zweiten Steuerparameter, also insbesondere alle den in den Umformungsstationen ablaufenden Umformungsprozess beeinflussenden Steuerparameter, stationsindividuell vorgegeben werden. Für einige Steuerparameter erfordert diese Ausführungsform der Erfindung jedoch erheblichen maschinenbaulichen Mehraufwand.

Ohne Beeinträchtigung der erfindungsgemäßen Grundidee können im Rahmen der Erfindung daher einzelne zweite Steuerparameter auch stationsübergreifend, d.h. für jeweils eine Gruppe von Umformstationen oder für alle Umformstationen, vorgegeben werden. Für eine stationsübergreifende Vorgabe eignen sich insbesondere Steuerparameter für Bauteile oder Baugruppen, die jeweils mehreren oder allen Umformstationen zugeordnet sind, wie beispielsweise Kompressoren und/oder Drosselventile zur Bereitstellung von Formfluid auf einem vorgegebenen Druckniveau.

Ebenfalls von der Erfindung umfasst sind Ausführungsformen, bei denen auch ein Teil der Steuerparameter für solche Bauteile oder Baugruppen, die in jeder einzelnen Umformstation vorhanden sind, stationsübergreifend vorgegeben werden. Beispielsweise ist denkbar, die Steuerparameter für den Reckantrieb der Umformstationen stationsübergreifend vorzugeben und die Steuerparameter für die Ventile der Umformstationen stationsindividuell vorzugeben. So wird eine einfache Steuerung ebenso gewährleistet wie eine adäquate stationsweise Optimierung des zeitlichen Zusammenwirkens von Reckbewegung und Blasfluidzuführung.

Beansprucht wird diese stationsweise individuelle Vorgabe von Steuerparametern für eine Blasmaschine. Dabei wird vordergründig an herkömmliche (Luft-)Blasmaschinen gedacht, bei denen die Vorformlinge an den einzelnen Umformstationen pneumatisch, also unter Einleitung eines gasförmigen Formfluids, in Behälter umgeformt werden. Im Rahmen der Erfindung kann unter Blasmaschine aber auch eine Formfüllvorrichtung verstanden werden, bei der die Vorformlinge hydraulisch, also unter Einleitung eines flüssigen Formfluids, in Behälter umgeformt werden. Typischerweise ist das flüssige Formfluid dabei ein Füllgut, das in dem Behälter verbleibt. Beide Maschinentypen weisen an den Umformstationen Baugruppen oder Bauteile wie zum Beispiel Ventile oder Reckeinrichten auf, die in analoger Weise herstellungsbedingten Unterschieden unterliegen und damit für eine formstationsindividuelle Vorgabe von Steuerparametern in Frage kommen.

Die stationsindividuelle Ansteuerung der einzelnen Umformstationen durch Vorgabe individueller oder stationspezifischer Steuerparameter ermöglicht damit in einfacher Weise die stationsweise Anpassung der Umformprozesse, und somit die Einstellung der Behältereigenschaften der mit bestimmten Umformstationen hergestellten Behälter. Damit lässt sich die Varianz in der Behälterqualität zwischen den mit verschiedenen Umformstationen hergestellten Behälter verringern.

Erfindungsgemäß ist, dass mindestens eine Eigenschaft eines fertiggestellten Behälters messtechnisch erfasst wird und dass unter Berücksichtigung der erfassten Eigenschaft die individuellen zweiten Steuerparameter für die zur Umformung des betreffenden Behälters verwendete Umformstation geeignet vorgegeben werden, um die betreffende Eigenschaft für nachfolgend in derselben Umformstation geformte Behälter im Hinblick auf gewünschte Behälterspezifikationen zu beeinflussen.

Mit der messtechnischen Erfassung von Eigenschaften, wie insbesondere einer Materialverteilung der Behälterwand oder eine Wanddicke an bestimmten Wandabschnitten des Behälters, können Rückschlüsse über die Güte und Qualität von mit bestimmten Umformstationen hergestellten Behältern gezogen werden. Diese Rückschlüsse lassen sich beispielsweise in einfacher Weise durch einen Vergleich der erfassten Eigenschaften mit Referenzeigenschaften herleiten. Werden Abweichungen zwischen der erfassten Eigenschaft und dem Referenzwert festgestellt, können die diese Eigenschaft beeinflussende Steuerparameter der jeweiligen Umformstation geeignet angepasst werden, um eine Verbesserung der Behälterqualität zu erreichen. Durch eine eindeutige Zuordnung der vermessenen fertiggestellten Behälter zu der Umformstation, die zur Herstellung dieses Behälters verwendet wurde, können gezielt die Steuerparameter verändert werden, die zur Ansteuerung der bestimmten Umformungsstation vorgesehen sind.

Durch die Berücksichtigung der Eigenschaften von vorangehend hergestellten oder produzierten Behälter bei der Vorgabe der individuellen Steuerparameter wird insbesondere sichergestellt, dass sich die Vorteile der Erfindung auch über einen längeren Zeitraum einstellen. Insbesondere lassen sich damit auch Abweichungen zwischen den Umformstationen ausgleichen, die sich durch unterschiedliche Verschleißverhalten zwischen gleichartigen Baugruppen unterschiedlicher Umformstationen über die Zeit einstellen.

Die durch eine gezielte Veränderung der zweiten Steuerparameter beeinflussten Behälterspezifikationen können Zielwerte oder Zielintervalle für objektive Eigenschaften wie Materialverteilung oder Sektionsgewichte, also Gewichtsmassen unterschiedlicher Bereiche des Behälters, sein, aber auch subjektive Eigenschaften wie Haptik oder Optik des Behälters betreffen.

Grundsätzlich ist denkbar, die messtechnische Erfassung von Eigenschaften fertiggestellter Behältern nach Entnahme des zu erfassenden Behälters aus einem Transportstrom durchzuführen, was in Fachkreisen auch als Offline- Messung bezeichnet wird. Bei einer Offline-Messung werden nicht alle Behälter untersucht sondern es können Behälter nach vorgegebener Verteilung entnommen werden. Wichtig ist dabei, dass die entnommenen Behälter derjenigen Umformstation zugeordnet werden können, die zur Herstellung des Behälters verwendet wurde. In der Regel ist dies problemlos möglich, indem in den jeweiligen Formen der Umformstation eine Nummer vorgesehen ist, die bei Herstellung des Behälter abgeformt wird und somit dauerhaft erkennbar bleibt. Wenn die aus dem Transportstrom entnommenen Behälter nicht wieder in den Transportstrom eingegliedert werden, können neben nichtzerstörungsfreien auch zerstörende Messverfahren wie Berstprüfungen oder Zerschneiden des Behälters und Wiegen der so erhaltenen einzelnen Sektionen durchgeführt werden.

In einer bevorzugten Ausgestaltung ist daran gedacht, dass die Eigenschaft der Behälter kontinuierlich erfasst wird. In einer kontinuierlichen Erfassung werden die Behälter insbesondere im kontinuierlichen Transportstrom zerstörungsfrei und verlustfrei untersucht. Fachleute sprechen hier auch von Inline-Messungen. Die dafür vorgesehenen Messeinrichtungen können beispielsweise entlang des Transportstroms nach Entnahme des Behälters aus der Umformstation bis zur Ausschleusung aus der Behälterherstellungsvorrichtung angeordnet sein. Wichtig ist dabei, dass der untersuchte Behälter derjenigen Umformstation zugeordnet werden kann, die zur Herstellung des Behälters verwendet wurde.

Grundsätzlich ist denkbar, dass die messtechnisch erfassten Eigenschaften der fertiggestellten Behälter zur Kontrolle und ggf. zur manuellen, also insbesondere von einem Bediener der Vorrichtung durchgeführten Veränderung von Steuerparametern herangezogen werden. Vorzugsweise ist jedoch vorgesehen, dass etwaige notwendige Anpassungen der Steuerparameter nach einem maschinellen Vergleich mit einer Referenzeigenschaft automatisch durchgeführt werden.

Gemäß einer bevorzugten Ausführungsform kann daher vorgesehen sein, dass die erfasste Eigenschaft mit einer Referenzeigenschaft verglichen wird und anhand des Vergleichs zwischen der erfassten Eigenschaft und der Referenzeigenschaft die individuellen zweiten Steuerparameter in einem geschlossenen Regelkreis geregelt werden.

Eine automatische Regelung der Steuerparameter ist insbesondere deshalb vorteilhaft, weil sich dadurch auch kurzfristige und/oder geringe Abweichungen in der Behälterqualität durch einen gezielten Eingriff in die stationsindividuellen Steuerparameter ausgleichen lassen. So lassen sich beispielsweise nicht nur verschleißbedingte oder andere langfristige Effekte kompensieren, sondern auch kurzfristige, auf den Umformprozess einwirkende Störungen wie beispielsweise Änderungen in der Umgebungstemperatur oder in der Luftfeuchtigkeit.

Weiter bevorzugt ist daran gedacht, dass zusätzlich zu den individuellen zweiten Steuerparameter auch mindestens einer der übrigen zweiten Steuerparameter und/oder der ersten Steuerparameter in dem Regelkreis geregelt wird. Unter den übrigen zweiten Steuerparameter werden insbesondere diejenigen Steuerparameter für die Umformstationen verstanden, die nicht umformstationsspezifisch individuell vorgegeben werden sondern umformstationsübergreifend, also Steuerparameter, die für eine Gruppe von mehreren ausgewählten oder für sämtliche Umformstationen vorgegeben werden. Dies erhöht die Flexibilität bei der Maschinensteuerung, was im besonderen Maße die bedarfsorientiere Steuerung und Regelung der Vorrichtung unterstützt.

Neben der Regelung der zweiten, zur Ansteuerung der Umformstationen vorgesehenen Steuerparameter, ist gemäß einer weiteren Ausführungsform der Erfindung im Übrigen auch daran gedacht, die ersten, zur Ansteuerung der Temperiervorrichtung der Blasmaschine vorgesehenen Steuerparameter in einem geschlossenen Regelkreis zu regeln. Unter anderem können die ersten Steuerparameter Vorgaben für Steuersignale zur Einstellung von Heizelementen oder Kühlelementen einer Temperiervorrichtung umfassen.

Als zu steuernde Bauteile oder Baugruppen einer Umformstation kommen verschieden Komponenten in Betracht. Insbesondere ist daran gedacht, dass die individuellen zweiten Steuerparameter für Vorblasventile der Umformstationen und/oder Steuerparameter für Hauptblasventile der Umformstationen und/oder Steuerparameter für Reckantriebe der Umformstationen und/oder Steuerparameter für Drosselventile der Umformstationen umfassen.

Hinsichtlich der untersuchten Eigenschaften der Behälter, die insbesondere zur Kontrolle der Behälterqualität und zur Anpassung der Steuerparameter dienen, ist in erster Linie daran gedacht, dass mindestens eine messtechnisch erfasste Eigenschaft des fertiggestellten Behälters eine Wandstärke oder eine Wandstärkenverteilung oder ein Sektionsgewicht des Behälters ist.

Zu den Behältereigenschaften, die einer Inline-Messung zugänglich sind, gehören exemplarisch auch eine Materialdichte, eine Kristallinität des verstreckten PET-Materials oder geometrische Parameter der fertig hergestellten Behälter, beispielsweise die Lage des sogenannten Anspritzpunktes.

Sämtliche Inline-Messungen können selbstverständlich auch als Offline-Messung erfolgen, während einige Behältereigenschaften in der Regel nur mittels Offline-Messung erfassbar sind. Hierzu gehören beispielhaft Berstdruck (maximaler Innendruck) oder Topload (maximale Vertikalkraft), da bei den entsprechenden Messungen der Behälter in der Regel zerstört wird. Auch Eigenschaften wie Dichtigkeitsprüfungen oder Barriereeigenschaften können in der Regel nur als Offline-Messung realisiert werden, da keine ausreichend schnellen Messverfahren zur Verfügung stehen.

Die vorstehend aufgelisteten Eigenschaften sind ausdrücklich exemplarisch und nicht einschränkend zu verstehen.

Die erfindungsgemäße individuelle Vorgabe von die Umformungsstationen betreffenden Steuerparametern erlaubt neben der bedarfsgerechten Ansteuerung verschiedener Komponenten der Stationen auch eine einfache Auswertung der Veränderungen der Steuerparameter über die Zeit, um somit einen Indikator für den aktuellen Verschleißzustand der Umformstationen bzw. einzelner Baugruppen der Umformstationen zu erhalten. Erfindungsgemäß ist daher, dass der zeitliche Verlauf wenigstens eines der individuellen zweiten Steuerparameter für eine Umformstation erfasst wird, und dass aus dem zeitlichen Verlauf des wenigstens einen Steuerparameters eine etwaige Veränderung einer Bauteilcharakteristik eines dem wenigstens einen Steuerparameter zugeordneten Bauteils der Umformstation abgeleitet wird.

Zur bedarfsgerechten Festlegung von Wartungsintervallen oder-terminen oder zur von an der Verschleißgeschwindigkeit einzelner Baugruppen der verschiedenen Umformstationen orientierten Anberaumung von Wartungsarbeiten ist zudem von Vorteil, wenn die abgeleitete Veränderung der Bauteilcharakteristik zur Abschätzung der zukünftigen Entwicklung der Bauteilcharakteristik extrapoliert wird, wobei insbesondere basierend auf der Extrapolation eine Wartung oder ein Austausch des betreffenden Bauteils terminiert wird.

Der dieser Ausgestaltung zugrundeliegende Erfindungsgedanke zielt darauf ab, dass aus dem unterschiedlichen Verhalten der verschiedenen Stationen und insbesondere aus der Steuerungs- und/oder Regelhistorie der unterschiedlichen Stationen eine Information gewonnen wird, ob möglicherweise ein Instandhaltungseingriff erforderlich ist. Es wird also insbesondere nach Auffälligkeiten gesucht. Wenn also zum Beispiel eine der mehreren Blasstationen gegenüber anderen Blasstationen auffallend abweichende Steuerwerte benötigt, könnte dies als ein Indikator für einen drohenden Ausfall herangezogen werden.

Die Extrapolation der Veränderung der Charakteristika von Bauteilen oder Baugruppen der Umformstationen ermöglicht in erster Linie eine verbesserte Abschätzungsgenauigkeit, wann es im Betrieb der Behälterherstellungsmaschine mit einer gewissen Wahrscheinlichkeit zu Abweichungen zwischen den einzelnen Umformstationen kommen wird, die zum Beispiel nicht mehr durch eine individuelle Vorgabe der Steuerparametern ausgeglichen werden können. Die Extrapolation ermöglicht darüber hinaus auch eine Abschätzung, wann eine beobachtete Baugruppe einen Verschleißzustand erreichen wird, der mit einer bestimmten Wahrscheinlichkeit einen Ausfall der Umformstation und somit einen Maschinenstillstand verursachen könnte.

Neben einer sehr guten Prognostizierbarkeit, wann die Varianz der Behälterqualität zwischen den mit unterschiedlichen Umformstationen hergestellten Behältern mit einer bestimmten Wahrscheinlichkeit eine bestimmte Toleranzgrenze überschreiten wird, ermöglicht diese präzise Einschätzung der Bauteilveränderung auch die Ausnutzung einer möglichst langen Nutzungsdauer der einzelnen Bauteile oder -gruppen. Bisher wurden die Austauschintervalle von Verschleißkomponenten wie zum Beispiel der Ventile der Umformstationen so festgelegt, dass es auch bei einem unerwartet überdurchschnittlich hohen Verschleiß einer Baugruppe einer Umformstation nicht zu einem Ausfall der Umformstation und somit zum unerwarteten Produktionsabstand kommt. Der Sicherheitsabstand zum wahrscheinlichen Ausfall der Umformstationskomponenten wurde also sehr hoch gewählt. Die Austauschtermine wurden baugruppenspezifisch festgelegt, sodass nach Erreichen des Austauschtermins Baugruppen der gleichen Sorte ungeachtet ihres tatsächlichen Verschleißzustandes ausgetauscht wurden. Dieses Vorgehen führt dazu, dass regelmäßig auch Baugruppen ausgetauscht werden, die einem unterdurchschnittlichen Verschleiß unterliegen und somit noch lange einsatzfähig gewesen wären. Durch die erfindungsgemäße Extrapolation können die Austauschintervalle deutlich genauer festgelegt werden. Die Bauteile können also zielgerichtet "on demand" ausgetauscht werden.

Um zum Beispiel solche durch herstellungsbedingte Abweichungen zwischen gleichartigen Bauteilen oder Baugruppen verschiedener Umformstationen hervorgerufene Unterschiede in der Behälterformung zwischen den verschiedenen Umformstationen möglichst frühzeitig zu minimieren, kann gemäß einer weiter bevorzugten Ausgestaltung vorgesehen sein, ausgewählte, den Formungsprozess bestimmende Braugruppen vor dem Einbau in die Umformstation hinsichtlich ihrer bestimmungsgemäßen Funktion zu untersuchen, um damit eine individuelle Bauteilcharakteristik des Bauteils oder der Baugruppe zu bestimmen. Insbesondere ist dabei daran gedacht, dass die Umformstationen jeweils wenigstens ein Ventil aufweisen, wobei vor Einbau des Ventils in die Umformstation eine Ventilcharakteristik des Ventils bestimmt wird, um einen Initialwert zur Vorgabe eines dem Ventil zugeordneten individuellen zweiten Steuerparameters zu erhalten. Alternativ ist denkbar, dass Standardparameter als Initialwert zur Vorgabe eines dem Ventil zugeordneten individuellen zweiten Steuerparameters verwendet werden.

Der dieser Ausgestaltung zugrundeliegende Erfindungsgedanke zielt darauf ab, dass jedes Ventil in seiner Charakteristik vermessen wird und dass das Vermessungsergebnis steuerungstechnisch berücksichtigt wird, indem jedem Ventil in Abhängigkeit von seiner Charakteristik ein etwas verschobener Schaltimpuls/Schaltzeitpunkt zugewiesen wird. Dadurch lassen sich von Ventil zu Ventil variierende Ansprechzeiten berücksichtigen, ohne dass die Ventile besonders aufwendig hergestellt werden müssten. Die Ventile können also günstiger ausgeführt werden und die vergleichsweise hohe Varianz von Ventil zu Ventil wird in der Steuerung berücksichtigt durch Hinterlegung der für das jeweilige Ventil ermittelten Charakteristik. Dies kann dadurch automatisiert erfolgen, dass busfähige Ventile verwendet werden und die benötigten Werte der Charakteristik im Ventil hinterlegt sind und über den Bus der Steuerung zur Verfügung stehen.

Die zu bestimmende Ventilcharakteristik kann also insbesondere die Schaltcharakteristik sein, wobei die Schaltcharakteristik insbesondere die Schaltverzögerung sein kann. Hinsichtlich der Schaltverzögerung ist zum Beispiel an die Latenz zwischen Schaltimpuls und Erreichen der gewünschten Ventilstellung gedacht.

Erfindungsgemäß ist zudem eine Blasmaschine zur Herstellung von Behältern aus Vorformlingen aus thermoplastischem Material aufweisend mindestens eine Temperiervorrichtung zum Temperieren der Vorformlinge und eine Umformvorrichtung mit mindestens zwei Umformstationen zur Umformung jeweils eines temperierten Vorformlings in einen Behälter, wobei die Blasmaschine eine Steuereinrichtung zur Steuerung und/oder Regelung der Temperiervorrichtung und der Umformvorrichtung aufweist, und wobei die Steuereinrichtung eingerichtet und ausgebildet ist zur Ausführung eines oben beschriebenen Verfahrens.

Vorzüge, Details und mögliche Ausgestaltungen der erfindungsgemäßen Blasmaschine ergeben sich nicht nur aus den folgenden Ausführungen sondern auch aus den obigen Erläuterungen zum erfindungsgemäßen Verfahren.

In einer vorteilhaften Ausgestaltung ist daran gedacht, dass die Umformstationen jeweils wenigstens ein Ventil aufweisen, wobei das Ventil eine Ventilsteuereinheit aufweist, die über eine Busanbindung mit der Steuereinrichtung verbindbar ist, wobei insbesondere die Ventilsteuereinheit einen Speicher für Daten zu einer individuellen Ventilcharakteristik aufweist.

In einem Speicher der Ventilsteuereinheit der busfähigen Ventile können insbesondere Angaben zum Schaltverhalten und zu Schaltzeiten hinterlegt sein. Diese Daten können zum Beispiel nach einer herstellerseitigen oder nach einer anwenderseitigen Bestimmung der Ventilcharakteristik in den Speicher abgelegt sein. Es kann insbesondere vorgesehen sein, dass die Steuereinrichtung der Blasmaschine auf die Daten der Ventile zugreift, um daraus einen dem Ventil zugeordneten Steuerparameter abzuleiten und für eine stationsspezifische Vorgabe zu verwenden.

Besonders vorteilhaft ist es, wenn bereits bei Einbau des Ventils in die Umformstation geeignete Daten in dem Speicher vorhanden sind. Derartige Daten können beispielsweise mittels Testmessungen an dem Ventils ermittelt werden und stellen sicher, dass unmittelbar nach Einbau die zur Herstellung qualitativ einwandfreier Behälter erforderliche, individuelle Ansteuerung des Ventils ermöglicht wird, ohne dass zunächst qualitativ minderwertige Behälter produziert und ausgewertet werden müssen.

In einer weiteren vorteilhaften Ausgestaltung kann vorgesehen sein, dass die Blasmaschine mindestens einen Sensor zur kontinuierlichen messtechnischen Erfassung mindestens einer Eigenschaft eines fertiggestellten Behälters aufweist. Dies ermöglicht grundsätzlich einen automatischen, regelungsbasierten Betrieb der Blasmaschine, der auch bei unvorhergesehen auf den Prozess einwirkenden Störungen jeweils die optimal erreichbare Behälterqualität sicherstellen kann.

Eine mit dem Sensor erfasste Eigenschaft ist dabei beispielsweise die Wandstärke oder eine Wandstärkenverteilung des Behälters.

Eine messtechnische Erfassung einer konkreten Wanddicke bzw. einer Wandstärke der fertiggestellten Behälter kann beispielsweise mit sogenannten Wanddickensensoren erfolgen, die beispielsweise optisch oder unter Verwendung von Schallwellen arbeiten.

Weitere Vorteile, Merkmale und Details der Erfindung ergeben sich aus den im Folgenden beschriebenen Ausführungsbeispielen unter Bezugnahme auf schematische Zeichnungen. Es zeigen:
- Fig. 1: eine stark schematisierte Darstellung einer erfindungsgemäßen Blasmaschine, und
- Fig. 2: eine stark schematisierte Darstellung verschiedener Komponenten einer Umformstation einer erfindungsgemäßen Blasmaschine.

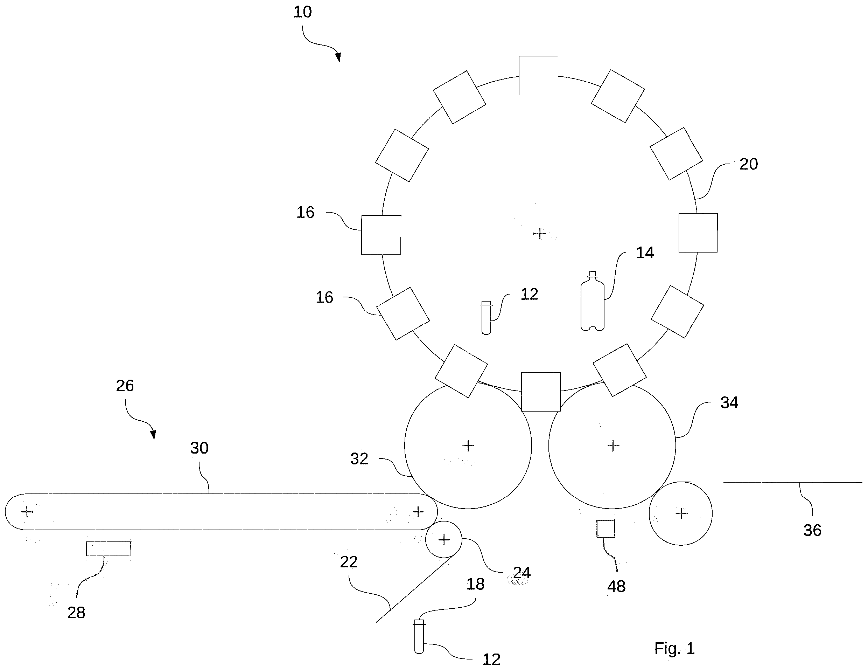

Der prinzipiell aus dem Stand der Technik bekannte Aufbau einer Vorrichtung 10 zur Herstellung eines Behälters aus Vorformlingen aus thermoplastischem Kunststoff ist in Figur 1 dargestellt. Die Darstellung zeigt die bevorzugte Ausbildung einer solchen Vorrichtung 10 in der Art einer Rotationsmaschine mit einem, mindestens zwei Umformstationen 16 tragenden, rotierenden Arbeitsrad 20. Im Bereich der Umformstationen 16 werden Vorformlinge 12 durch biaxiale Expansion in Behälter 14 umgeformt.

In einer typischen Ausgestaltung enthält eine gattungsgemäße Vorrichtung 10 zur Herstellung eines Behälters 14 eine Temperiervorrichtung 26 zur thermischen Konditionierung der Vorformlinge 12. Wie vorliegend gezeigt, kann die Temperiervorrichtung 26 dem Arbeitsrad 20 vorgelagert sein, sodass die Vorformlinge 12 vor Erreichen der Umformstationen 16 erwärmt werden können. Von einer Zuführeinrichtung 22 können schematisch dargestellte Vorformlinge 12, die auch als Preforms bezeichnet werden, unter Verwendung eines Übergaberades 24 kontinuierlich einer Temperiervorrichtung 26 zugeführt werden. Im Bereich der Temperiervorrichtung 26, in der die Vorformlinge 12 entlang einer Heizstrecke transportiert und dabei thermisch konditioniert werden, können die Vorformlinge 12 anwendungsabhängig beispielsweise mit ihren Mündungsabschnitten 18 in lotrechter Richtung nach oben oder in lotrechter Richtung nach unten transportiert werden.

Die Temperiervorrichtung 26 ist beispielsweise mit Heizelementen 28 ausgestattet, die entlang einer Transporteinrichtung 30 zur Ausbildung der Heizstrecke angeordnet sind. Als Transporteinrichtung 30 kann beispielsweise eine umlaufende Förderkette mit Transportdornen zur Halterung der Vorformlinge 12 verwendet werden. Als Heizelemente 28 eignen sich beispielsweise Infrarot-Strahler (IR-Strahler) oder Licht emittierende Dioden oder Naheinfrarot-Strahler (NIR-Strahler). Da solche Temperiervorrichtungen in vielfältiger Art im Stand der Technik bekannt sind und die konstruktiven Einzelheiten der Temperiervorrichtung für die vorliegende Erfindung nicht wesentlich sind, kann auf eine detailliertere Beschreibung verzichtet und auf den Stand der Technik verwiesen werden, insbesondere auf den Stand der Technik zu Temperiervorrichtungen von Blas- und von Streckblasmaschinen.

Nach einer ausreichenden Temperierung, auch thermische Konditionierung genannt, werden die Vorformlinge 12 von einem Übergaberad 32 zu einem rotationsfähig angeordneten, d.h. um eine vertikale Maschinenachse umlaufend antreibbaren Arbeitsrad 20 bzw. an Umformstationen 16 übergeben, die an dem Arbeitsrad 20 umfangsverteilt angeordnet sind. Das Arbeitsrad 20 ist mit einer Mehrzahl, also mindestens zwei solcher Umformstationen 16 ausgestattet. Für die biaxiale Expansion der Vorformlinge 12 Im Bereich der Umformstationen 16 werden die Vorformlinge 12 mit einem unter Druck stehenden Formfluid befüllt. Als Formfluid kann ein Gas oder eine Flüssigkeit dienen.

In hydraulisch formenden Blasmaschinen, sogenannten Formfüllmaschinen, erfolgt im Bereich der Umformstationen 16 sowohl eine Umformung der Vorformlinge 12 in die schematisch dargestellten Behälter 14 als auch eine Befüllung der Behälter 14 mit dem vorgesehenen Füllgut. Das Formen jedes Behälters 14 erfolgt in Formfüllmaschinen vorzugsweise zeitgleich mit der Befüllung, wobei das Füllgut als Formfluid, also als Druckmedium für das Formen dient. In pneumatisch formenden Blas- und Streckblasmaschinen werden die Vorformlinge 12 im Bereich der Umformstationen 16 mit einem Blasgas gefüllt, das als Druckmedium für das Formen dient.

Das Arbeitsrad 20 läuft im Produktionsbetrieb kontinuierlich mit einer gewünschten Umlaufgeschwindigkeit um. Während eines Umlaufs erfolgt das Einsetzen eines Vorformlings 12 in eine Umformstation 16, die Expansion des Vorformlings 12 zu einem Behälter 14 und die Entnahme des Behälters 12 aus der Umformstation 16. Bei Ausgestaltung der erfindungsgemäßen Vorrichtung als Formfüllmaschine erfolgt auf dem Arbeitsrad 20, insbesondere im Bereich der Umformstationen 16 gleichzeitig auch eine Füllung der Behälter 14 mit einem Füllgut. Die Umformstationen 16 können eine Reckstange aufweisen, die zur Unterstützung der axialen Streckung und Führung in den Vorformling 12 einfahrbar ist. Wenn die Umformstationen 16 eine Reckstange aufweisen, erfolgt während eines Umlaufes des Arbeitsrad 20 auch gleichzeitig eine Reckung der Vorformlinge 12.

Nach dem Formen und gegebenenfalls dem Füllen der Behälter 14 im Bereich des Arbeitsrades 20 werden die Behälter 14 von einem Entnahmerad 34 vom Arbeitsrad 20 entnommen, weitertransportiert und einer Ausgabestrecke 36 zugeführt. Vor dem Ausschleusen der Behälter 14 aus der Blasmaschine 10 werden die Behälter 14 vorzugsweise in einen Bereich eines Sensors 48 transportiert, der zumindest einige, vorzugsweise alle Behälter 14 kontinuierlich, also in einem Inline-Messverfahren, sensorisch erfasst, um mindestens eine Eigenschaft wie eine Materialverteilung der Behälterwand messtechnisch zu erfassen. Wie vorliegend angedeutet, kann der Sensor 48 zwischen dem Arbeitsrad 20 und dem Ausgabebereich 36 im Bereich des Entnahmerades 34 angeordnet sein.

Als Material für die Vorformlinge 12 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 12 sind an die Größe, das Gewicht und/oder an die Gestaltung der herzustellenden Behälter 14 angepasst.

Eine Handhabung der Vorformlinge 12 und/oder der Behälter 14 erfolgt vorzugsweise unter Verwendung von Zangen und/oder den Mündungsabschnitt 18 wenigstens bereichsweise von innen oder von außen beaufschlagenden Klemm- oder Steckdornen. Solche Handhabungsmittel sind ebenfalls aus dem Stand der Technik hinlänglich bekannt und benötigen deshalb keiner detaillierteren Beschreibung.

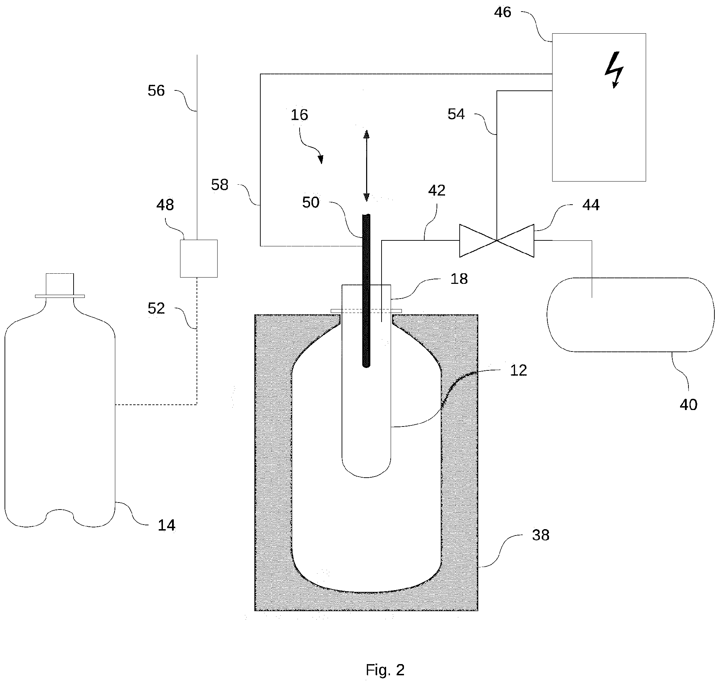

Die Fig. 2 zeigt ausgewählte Komponenten einer Blasstation 16 in stark schematisierter Darstellung in Zusammenwirkung mit einer den Umformungsprozess der Umformstation 16 steuernden bzw. regelnden Steuereinrichtung 46 und einem Sensor 48 zur Erfassung von Eigenschaften eines mit der Umformstation 16 fertiggestellten Behälters 14.

Die Figur 2 zeigt eine Blasform 38 der Umformstation 16 mit einem darin gehaltenen temperierten Vorformling 12. Zur biaxialen Expansion des Vorformlings 12 in den Grenzen der Blasform 38 ist eine Fluidzuleitung 42 mit dem Innenraum des Vorformlings 12 verbunden. Die Fluidzuleitung 42 wird von einem Schaltventil 44 beherrscht, das mittels einer Steuerleitung 54 mit einer Steuereinrichtung 46 einer Blasmaschine 10 verbunden ist. Die Steuereinrichtung 46 ist ihrerseits eingerichtet und ausgebildet, anhand von vorgebbaren Steuerparametern Steuersignale über die Steuerleitung 54 an das Ventil 44 zu senden, um das Ventil 44 in eine Offen- bzw. in eine Geschlossenstellung zu bringen. In der Offenstellung des Ventils 44 wird die Fluidleitung 42 mit einem stromaufwärts zum Ventil 44 angeordneten Druckbehälter 40 verbunden, sodass ein in dem Druckbehälter 40 unter Druck bereitgestelltes Formfluid wie zum Beispiel ein Blasgas oder eine Formflüssigkeit in den Innenraum des Vorformlings 12 eingeleitet werden kann. Vorzugsweise kann das Ventil 44 als busfähiges Ventil ausgebildet sein. Bei der Verwendung eines busfähigen Ventils kann die Steuerleitung 54 als Busleitung ausgebildet sein. Es bietet sich im Übrigen an, dass als Steuereinrichtung 46 die zur Steuerung der Blasmaschine 10 vorgesehene Maschinensteuerung verwendet wird. Die Steuereinrichtung 46 kann auch eine in die Maschinensteuerung integrierte Steuerungseinheit sein.

Zur Unterstützung der biaxialen Expansion des Vorformlings 12 kann eine in axialer Richtung des Vorformlings 12 verschieblich gelagerte und im Mündungsbereich 18 des Vorformlings 12 eintauchend in den Innenraum des Vorformlings 12 verfahrbare Reckstange 50 an der Umformstation 16 angeordnet sein. Ein zur axialen Verschiebung der Reckstange 50 eingerichteter Reckstangenantrieb ist mittels einer Steuerleitung 58 mit der Steuereinrichtung 46 verbunden. In Abhängigkeit von vorgegebenen Steuerparametern kann die Steuereinrichtung 46 Steuersignale über die Steuerleitung 58 an den Reckantrieb senden, um eine axiale Verschiebung der Reckstange 50 auszulösen.

Die Figur 2 zeigt des Weiteren einen über eine Steuerleitung 56 mit der Steuereinrichtung 46 verbundenen Sensor 48, der eingerichtet und ausgebildet ist, eine Eigenschaft eines mit einer bestimmten Umformstation 16 umgeformten Behälters 14 messtechnisch zu erfassen. Die symbolisch dargestellte Sensorstrecke 52 repräsentiert die Messverbindung zwischen dem Sensor 48 und dem fertiggestellten Behälter 14. Die messtechnische Erfassung von Eigenschaften des fertiggestellten Behälters 14 kann kontaktlos oder kontaktbehaftet durchgeführt werden. In erster Linie ist bei der sensorischen Erfassung des fertiggestellten Behälters an eine Wandstärkemessung bzw. an eine Messung der Materialverteilung gedacht. Die Wanddicke oder Materialverteilung lässt sich beispielsweise durch optische, also insbesondere mit Lichtwellen arbeitende und/oder akustische, also insbesondere mit Schallwellen arbeitende Messverfahren durchführen. Es versteht sich, dass auch andere Eigenschaften, wie zum Beispiel die Oberflächenstruktur bzw. die Profilierung des fertiggestellten Behälters messtechnisch erfassbar sein können. Entsprechend können auch andere, an die zu erfassende Eigenschaft angepasste Messverfahren Anwendung finden. Es versteht sich weiter, dass nicht nur ein einziger Sensor sondern auch mehrere zur Erfassung von Eigenschaften des fertiggestellten Behälters 14 vorgesehen sein können.

Durch eine Rückkopplung der mit dem Sensor 48 erfassten Eigenschaften eines mit einer bestimmten Umformstation 16 hergestellten Behälters 14 an die Steuereinrichtung 46 kann mithilfe der Steuereinrichtung 46 ein Vergleich zwischen den erfassten Eigenschaften des fertiggestellten Behälters 14 und Behälterreferenzeigenschaften vorgenommen werden. Die Behälterreferenzeigenschaften können dazu in einem von der Steuereinrichtung 46 auslesbaren Speicher abgelegt sein. Bei Auftreten einer Differenz zwischen den erfassten Eigenschaften und den Behälterreferenzeigenschaften kann eine Veränderung der für die Ansteuerung des Ventils 44 und/oder der Reckstange 50 vorgesehenen Steuerparameter vorgenommen werden, um den Umformprozess einer bestimmten Umformstation 16 derart zu beeinflussen, dass die Eigenschaften von nachfolgenden mit der Umformstation 16 hergestellten Behältern 14 den Behälterreferenzeigenschaften zumindest näherungsweise entsprechen. Die den Umformungsprozess beeinflussenden Steuerparameter, die zum Beispiel zur Ansteuerung des Ventils 44 oder der Reckstange 50 dienen können, werden vorzugsweise durch einen geschlossenen Regelkreis geregelt vorgegeben, sodass Abweichungen zwischen den erfassten Eigenschaften und den Behälterreferenzeigenschaften besonders schnell und kontinuierlich verringert werden können.

### Bezugszeichenliste

- 10: Blasmaschine
- 12: Vorformling
- 14: Behälter
- 16: Umformstation
- 18: Mündungsbereich
- 20: Arbeitsrad
- 22: Zuführeinrichtung
- 24: Übergaberad
- 26: Temperiervorrichtung
- 28: Heizelemente
- 30: Transporteinrichtung
- 32: Übergaberad
- 34: Entnahmerad
- 36: Ausgabestrecke
- 38: Blasform
- 40: Druckbehälter
- 42: Fluidleitung
- 44: Ventil
- 46: Steuereinrichtung
- 48: Sensor
- 50: Reckstange
- 52: Sensorstrecke
- 54: Steuerleitung
- 56: Steuerleitung
- 58: Steuerleitung

## Patentansprüche

1. Verfahren zur Herstellung von Behältern (14) aus Vorformlingen (12) aus thermoplastischem Material mittels einer Blasmaschine (10) aufweisend mindestens eine Temperiervorrichtung (26) und eine Umformvorrichtung mit mindestens zwei Umformstationen (16), wobei die Vorformlinge (12) mittels der Temperiervorrichtung (26) anhand vorgebbarer erster Steuerparameter temperiert werden, und wobei jeweils ein temperierter Vorformling (12) mittels einer der Umformstationen (16) anhand vorgebbarer zweiter Steuerparameter in einen Behälter (14) umgeformt wird, und wenigstens einer der zweiten Steuerparameter für jede der Umformstationen (16) individuell vorgegeben wird und mindestens eine Eigenschaft eines fertiggestellten Behälters (14) messtechnisch erfasst wird und dass unter Berücksichtigung der erfassten Eigenschaft die individuellen zweiten Steuerparameter für die zur Umformung des betreffenden Behälters verwendete Umformstation (16) geeignet vorgegeben werden, um die betreffende Eigenschaft für nachfolgend in derselben Umformstation (16) geformte Behälter (14) im Hinblick auf gewünschte Behälterspezifikationen zu beeinflussen, **dadurch gekennzeichnet, dass** der zeitliche Verlauf wenigstens eines der individuellen zweiten Steuerparameter für eine Umformstation (16) erfasst wird, und dass aus dem zeitlichen Verlauf des wenigstens einen Steuerparameters eine etwaige Veränderung einer Bauteilcharakteristik eines dem wenigstens einen Steuerparameter zugeordneten Bauteils der Formstation abgeleitet wird..

2. Verfahren nach Anspruch 1, **dadurch gekennzeichnet, dass** die Eigenschaft der Behälter kontinuierlich erfasst wird, wobei insbesondere die erfasste Eigenschaft mit einer Referenzeigenschaft verglichen wird und anhand des Vergleichs zwischen der erfassten Eigenschaft und der Referenzeigenschaft die individuellen zweiten Steuerparameter in einem geschlossenen Regelkreis geregelt werden, wobei insbesondere zusätzlich zu den individuellen zweiten Steuerparameter auch mindestens einer der übrigen zweiten Steuerparameter und/oder der ersten Steuerparameter in dem Regelkreis geregelt werden.

3. Verfahren nach einem der Ansprüche 1 bis 2, **dadurch gekennzeichnet, dass** die individuellen zweiten Steuerparameter für Vorblasventile der Umformstationen (16) und/oder Steuerparameter für Hauptblasventile der Umformstationen (16) und/oder Steuerparameter für Reckantriebe der Umformstationen und/oder Steuerparameter für Drosselventile der Umformstationen (16) umfassen.

4. Verfahren nach einem der Ansprüche 1 bis 3 **dadurch gekennzeichnet, dass** mindestens eine messtechnisch erfasste Eigenschaft des fertiggestellten Behälters (14) eine Wandstärke oder eine Wandstärkenverteilung oder ein Sektionsgewicht des Behälters (14) ist.

5. Verfahren nach Anspruch 1, **dadurch gekennzeichnet, dass** die abgeleitete Veränderung der Bauteilcharakteristik zur Abschätzung der zukünftigen Entwicklung der Bauteilcharakteristik extrapoliert wird, wobei insbesondere basierend auf der Extrapolation eine Wartung oder ein Austausch des betreffenden Bauteils terminiert wird.

6. Verfahren nach einem der Ansprüche 1 bis 5, **dadurch gekennzeichnet, dass** die Umformstationen (16) jeweils wenigstens ein Ventil aufweisen, wobei vor Einbau des Ventils in die Umformstation (16) eine Ventilcharakteristik des Ventils bestimmt wird, um einen Initialwert zur Vorgabe eines dem Ventil zugeordneten individuellen zweiten Steuerparameters zu erhalten.

7. Blasmaschine (10) zur Herstellung von Behältern (14) aus Vorformlingen (12) aus thermoplastischem Material aufweisend mindestens eine Temperiervorrichtung (26) zum Temperieren der Vorformlinge (12) und eine Umformvorrichtung mit mindestens zwei Umformstationen (16) zur Umformung jeweils eines temperierten Vorformlings (12) in einen Behälter (14), wobei die Blasmaschine (10) eine Steuereinrichtung (46) zur Steuerung und/oder Regelung der Temperiervorrichtung (26) und der Umformvorrichtung aufweist, **dadurch gekennzeichnet, dass** die Steuereinrichtung (46) eingerichtet und ausgebildet ist zur Ausführung eines Verfahrens nach einem der Ansprüche 1 bis 6.

8. Blasmaschine (10) nach Anspruch 7, **dadurch gekennzeichnet, dass** die Umformstationen (16) jeweils wenigstens ein Ventil aufweisen, wobei das Ventil (44) eine Ventilsteuereinheit aufweist, die über eine Busanbindung (46) mit der Steuereinrichtung (46) verbindbar ist, wobei insbesondere die Ventilsteuereinheit einen Speicher für Daten zu einer individuellen Ventilcharakteristik aufweist, und wobei insbesondere bereits bei Einbau des Ventils in die Umformstation (16) geeignete Daten in dem Speicher vorhanden sind.

9. Blasmaschine (10) nach einem der Ansprüche 7 oder 8, **dadurch gekennzeichnet, dass** die Blasmaschine (10) mindestens einen Sensor (48) zur kontinuierlichen messtechnischen Erfassung mindestens einer Eigenschaft eines fertiggestellten Behälters (14) aufweist, und wobei eine mit dem Sensor (48) erfassbare Eigenschaft insbesondere die Wandstärke oder eine Wandstärkenverteilung des Behälters (14) ist.

## Claims

1. A method for producing containers (14) from preforms (12) of thermoplastic material by means of a blow molding machine (10) having at least one temperature control device (26) and a forming device with at least two forming stations (16), wherein the preforms (12) are temperature-controlled by means of the temperature control device (26) using predeterminable first control parameters, and wherein in each case a temperature-controlled preform (12) is formed into a container (14) by means of one of the forming stations (16) using predeterminable second control parameters, and at least one of the second control parameters for each of the forming stations (16) is specified individually and at least one property of a finished container (14) is recorded by measurement and that, taking into account the recorded property, the individual second control parameters for the forming station (16) used for forming the corresponding container are suitably specified in order to influence the corresponding property for containers (14) subsequently formed in the same forming station (16) with regard to desired container specifications, **characterized in that** the chronological progression of at least one of the individual second control parameters for a forming station (16) is recorded, and that from the chronological progression of the at least one control parameter any change in a component characteristic of a component of the forming station assigned to the at least one control parameter is derived.

2. The method according to claim 1, **characterized in that** the property of the container is continuously recorded, wherein in particular the recorded property is compared with a reference property and based on the comparison between the recorded property and the reference property, the individual second control parameters are controlled in a closed loop, wherein in particular additionally to the individual second control parameters, at least one of the remaining second control parameters and/or of the first control parameters is controlled in the control loop as well.

3. The method according to one of claims 1 to 2, **characterized in that** the individual second control parameters for pre-blow valves of the forming stations (16) and/or control parameters for main blow valves of the forming stations (16) and/or control parameters for stretching drives of the forming stations and/or control parameters for throttle valves of the forming stations (16) comprise.

4. The method according to one of claims 1 to 3 , **characterized in that** at least one property of the finished container (14) recorded by measurement is a wall thickness or a wall thickness distribution or a section weight of the container (14).

5. The method according to claim 1, **characterized in that** the derived change in the component characteristic is extrapolated to estimate the future development of the component characteristic, wherein maintenance or replacement of the corresponding component is scheduled in particular based on the extrapolation.

6. The method according to one of claims 1 to 5, **characterized in that** the forming stations (16) each have at least one valve, wherein a valve characteristic of the valve is determined before the valve is installed in the forming station (16) in order to obtain an initial value for specifying an individual second control parameter assigned to the valve.

7. A blow molding machine (10) for producing containers (14) from preforms (12) of thermoplastic material, having at least one temperature control device (26) for temperature-controlling the preforms (12) and a forming device with at least two forming stations (16) for forming in each case a temperature-controlled preform (12) into a container (14), wherein the blow molding machine (10) has a control device (46) for controlling and/or regulating the temperature control device (26) and the forming device, **characterized in that** the control device (46) is set up and configured for executing a method according to one of claims 1 to 6.

8. The blow molding machine (10) according to claim 7, **characterized in that** the forming stations (16) each have at least one valve, wherein the valve (44) has a valve control unit which can be connected to the control device (46) via a bus connection (46), wherein in particular the valve control unit has a memory for data relating to an individual valve characteristic, and wherein in particular suitable data are already present in the memory when the valve is installed in the forming station (16).

9. The blow molding machine (10) according to one of claims 7 or 8, **characterized in that** the blow molding machine (10) has at least one sensor (48) for the continuous recording of at least one property of a finished container (14) by measurement, and wherein a property which can be recorded with the sensor (48) in particular is the wall thickness or a wall thickness distribution of the container (14).

## Revendications

1. Procédé de fabrication de récipients (14) à partir de préformes (12) en matériau thermoplastique au moyen d'une machine de moulage par soufflage (10) qui présente au moins un dispositif de tempérage (26) et un dispositif de formage avec au moins deux stations de formage (16), les préformes (12) étant tempérées au moyen du dispositif de tempérage (26) en fonction de premiers paramètres de commande prédéfinissables et une préforme (12) tempérée étant respectivement transformée en récipient (14) au moyen de l'une des stations de formage (16) en fonction de seconds paramètres de commande prédéfinissables, et l'un au moins des seconds paramètres de commande étant individuellement prédéfini pour chacune des stations de formage (16) et une caractéristique au moins d'un récipient (14) fini étant métrologiquement déterminée, les seconds paramètres de commande individuels pour la station de formage (16) utilisée pour le formage du récipient en question étant prédéfinis de façon appropriée en tenant compte de la caractéristique mesurée pour influer, en vue des spécifications souhaitées, sur la caractéristique concernée de récipients (14) formés par la suite dans la même station de formage (16), **caractérisé en ce que** la variation dans le temps d'au moins l'un des seconds paramètres de commande individuels pour une station de formage (16) est saisie et **en ce qu'**une éventuelle modification d'une caractéristique d'une pièce de la station de moulage affectée au(x) paramètre(s) de commande en question est déduite de la variation dans le temps du (des) second(s) paramètre(s) de commande individuel(s).

2. Procédé selon la revendication 1, **caractérisé en ce que** la caractéristique du récipient est déterminée en continu et notamment comparée à une caractéristique de référence, les seconds paramètres de commande individuels étant alors réglés dans une boucle d'asservissement fermée sur la base de la comparaison entre la caractéristique déterminée et la caractéristique de référence et l'un au moins des autres seconds paramètres de commande et/ou des premiers paramètres de commande étant notamment réglé dans la boucle d'asservissement en plus des seconds paramètres de commande individuels.

3. Procédé selon l'une des revendications 1 à 2, **caractérisé en ce que** les seconds paramètres de commande individuels comprennent des paramètres de commande pour des soupapes de pré-soufflage des stations de formage (16) et/ou des paramètres de commande pour des soupape de soufflage principal des stations de formage (16) et/ou des paramètres de commande pour des entraînements de barres d'étirage des stations de formage et/ou des paramètres de commande pour des soupapes d'étranglement des stations de formage (16).

4. Procédé selon l'une des revendications 1 à 3, **caractérisé en ce qu'**au moins une caractéristique métrologiquement déterminée d'un récipient (14) fini est une épaisseur de paroi ou une variation d'épaisseur de paroi ou le poids d'une section du récipient (14).

5. Procédé selon la revendication 1, **caractérisé en ce que** la modification déduite de la caractéristique d'une pièce est extrapolée pour estimer l'évolution future de la caractéristique de la pièce, cette extrapolation permettant notamment de planifier un entretien ou un remplacement de la pièce en question,

6. Procédé selon i'une des revendications 1 à 5, **caractérisé en ce que** les stations de formage (16) présentent respectivement au moins une soupape, une caractéristique de la soupape étant déterminée avant le montage de la soupape dans la station de formage (16) pour obtenir une valeur initiale en vue de définir un second paramètre de commande individuel associé à la soupape.

7. Machine de moulage par soufflage (10) pour la fabrication de récipients (14) à partir de préformes (12) en matériau thermoplastique, présentant au moins un dispositif de tempérage (26) pour le tempérage des préformes (12) et un dispositif de formage avec au moins deux stations de formage (16) pour respectivement transformer une préforme (12) tempérée en un récipient(14), la machine de moulage par soufflage (10) présentant un dispositif de commande (46) pour la commande et/ou la régulation du dispositif de tempérage (26) et du dispositif de formage, **caractérisée en ce que** le dispositif de commande (46) est équipé et conçu pour l'exécution d'un procédé selon l'une des revendications 1 à 6.

8. Machine de moulage par soufflage (10) selon la revendication 7, **caractérisée en ce que** les stations de formage (16) présentent respectivement au moins une soupape, la soupape (44) présentant une unité de commande de soupape pouvant être connectée par bus (46) au dispositif de commande (46), l'unité de commande de soupape notamment présentant une mémoire de stockage de données relatives à une caractéristique individuelle de soupape, des données appropriées étant notamment déjà disponibles dans la mémoire au moment du montage de la soupape dans la station de formage (16).

9. Machine de moulage par soufflage (10) selon l'une des revendications 7 ou 8, **caractérisée en ce que** la machine de moulage par soufflage (10) présente au moins un détecteur (48) pour la saisie métrologique continue d'au moins une caractéristique d'un récipient (14) fini, la caractéristique saisie avec le détecteur (48) étant notamment l'épaisseur de paroi ou une variation d'épaisseur de paroi du récipient (14).
